# EUROPÄISCHE PATENTSCHRIFT

(11) **EP 0 504 578 B1**
(45) Veröffentlichungstag und Bekanntmachung des Hinweises auf die Patenterteilung: **12.04.1995**
(21) Anmeldenummer: 92102129.1
(22) Anmeldetag: 08.02.1992
(51) Int. Cl.: B62D 55/32, G01M 17/00, B65G 43/02

(54) **Verfahren und Einrichtung zum Überwachen von Gleisketten eines Fahrzeuges im Fahrbetrieb**
Procedure and device for control of crawler tracks of a vehicle whilst in motion
Procédé et dispositif pour contrôler des chenilles d'un véhicule en operation de mouvement

(30) Priorität: 21.03.1991 DE 4109257
(43) Veröffentlichungstag der Anmeldung: 23.09.1992
(73) Patentinhaber: Dr.Ing.h.c. F. Porsche Aktiengesellschaft, 70435 Stuttgart (DE)
(72) Erfinder: Depfenhart, Friedrich, W-7251 Heimsheim (DE)

(56) Entgegenhaltungen:
- EP-A- 0 011 264
- EP-A- 0 178 468
- DE-A- 3 534 307

## Beschreibung

Die Erfindung betrifft ein Verfahren zum Überwachen von Gleisketten eines Fahrzeuges im Fahrbetrieb auf Fehlfunktionen gemäß dem Oberbegriff des Patentanspruches 1 sowie eine Einrichtung zur Durchführung des Verfahrens.

Gleisketten sind hoch beanspruchte und verschleißbehaftete Fahrzeugteile, deren Ausfall zur Manövrierunfähigkeit des Fahrzeuges und zu einem unkontrollierten Verhalten des Fahrzeuges führt. Ein Defekt an der Gleiskette kündigt sich zwar akustisch an, jedoch ist dies in einem mit einer Gleiskette ausgerüsteten Fahrzeug wegen des dort gewöhnlich herrschenden hohen Geräuschpegels nicht unbedingt wahrnehmbar.

Aufgabe der Erfindung ist es, ein Verfahren und eine Einrichtung zum Überwachen von Gleisketten eines Fahrzeuges im Fahrbetrieb hinsichtlich eines Fehlers an der Gleiskette zu schaffen.

Diese Aufgabe wird durch die Merkmale in den Ansprüchen gelöst, wobei die Unteransprüche wesentliche Weiterbildungen enthalten.

Die Erfindung zeichnet sich vor allem dadurch aus, daß eine unzulässige Teilungsänderung der Gleiskette, z.B. durch einen Anriß bei einer Endlosgummibandgleiskette, die in der DE-A-39 23 975 näher beschrieben ist, schon frühzeitig erkannt und angezeigt wird. So ist das Fahrzeug beim Auftreten eines Fehlersignales noch manövrierfähig und kann aus eigener Kraft eine Instandsetzungseinrichtung anlaufen. Die Sicherheit der Fahrzeuginsassen wird hierdurch erhöht, da ein verschleißbedingter oder durch andere äussere Einflüsse erfolgter Riß der Gleiskette nicht mehr überraschend auftreten kann und somit kritische Fahrzustände weitestgehend vermieden werden.

Die Erfindung schließt Fehlauslösungen, die durch zufällig auftretende Ereignisse wie z.B. Steine in der Gleiskette hervorrufen werden könnten, aus, indem geprüft wird, ob das einem erhöhten Laufgeräusch entsprechende Signal für eines der Glieder der Endlosgummibandgleiskette eine vorgegebene Häufigkeit überschreitet.

Die Erfindung wird nachstehend anhand eines in der Zeichnung dargestellten Ausführungsbeispiels näher erläutert.

Es zeigen:
- Fig. 1: eine Ansicht eines Endabtriebsgehäuses eines mit einer Endlosgummibandgleiskette ausgestatteten Fahrzeuges mit einer nach dem erfindungsgemäßen Verfahren arbeitenden Einrichtung,
- Fig. 2: ein Schaltschema für eine Auswerteschaltung der Einrichtung und
- Fig. 3a und 3: b Darstellungen eines Einlaufes einer defekten Endlosgummibandgleiskette auf ein Triebrad.

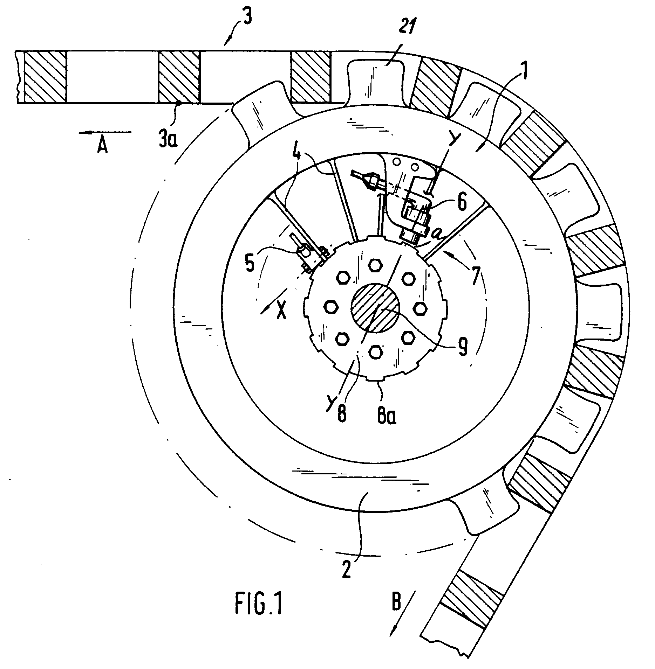

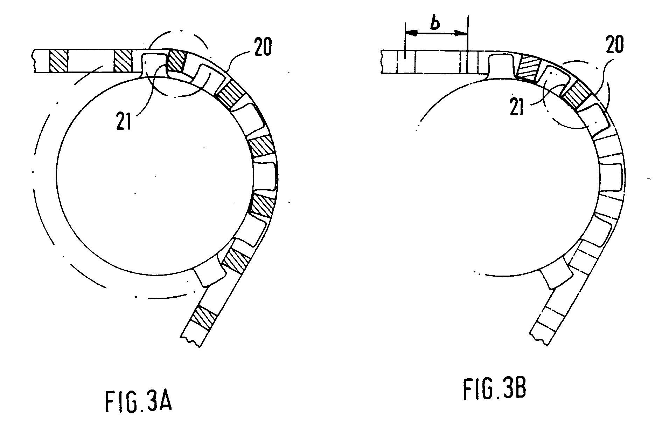

Fig. 1 zeigt eine Ansicht von innen auf eine Stirnseite eines Endabtriebsgehäuses 1 mit einem Triebrad 2 und einer aufgelegten Endlosgummibandgleiskette 3, die eine Teilung (Fig. 3b) aufweist, welche bei dieser Art von Kette durch Quertraversen bestimmt wird, an denen der Zahneingriff des Triebrades 2 stattfindet. An einer Rippe 4 des Endabtriebsgehäuses 1 sitzt ein Schwingbeschleunigungsaufnehmer 5. Dieser ist so angeordnet, daß seine Achse höchster Empfindlichkeit X so ausgerichtet ist, daß daß Laufgeräusch ein maximales Signal im Schwingbeschleunigungsaufnehmer 5 hervorruft. Insbesondere ist dies bei einer mittigen Ausrichtung zwischen der Richtung des Lasttrums A und der Richtung des Lasttrums B der Fall. Ein induktiver Aufnehmer 6 eines Drehimpulsgebers 7 sitzt über einem Impulsring 8, der mit einer Antriebswelle 9 drehfest verbunden ist. Jedem Zahn 21 des Triebrades 2 ist eine Impulsmarke 8a auf dem Impulsring 8 zugeordnet.

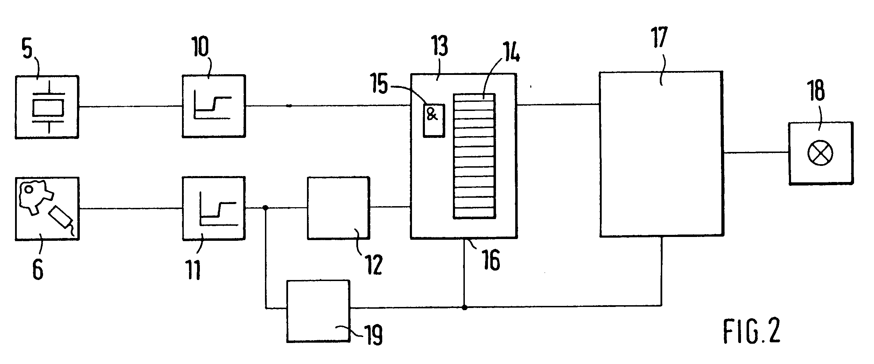

Dem Schwingbeschleunigungsaufnehmer 5 ist, wie in Fig. 2 gezeigt, eine Auswerteschaltung 10 nachgeschaltet. Mit dem induktiven Aufnehmer 6 verbunden ist eine Impulsformerstufe 11, deren Ausgangssignal auf einem ersten Zähler 12 geführt ist. Dieser Zähler 12 adressiert einen Speicher 13, der soviele Speicherplätze 14 enthält, wie die Endlosgummibandgleiskette 3 Teilungen aufweist. Die einzelnen Speicherplätze 14 sind über eine Addierstufe 15 mit dem Eingang des Speichers 13 der Auswerteschaltung 10 verbunden. Die Addierstufe 15 erhöht den Wert des adressierten Speicherplatzes 14 bei anliegendem Signal der Auswerteschaltung 10 um eins. Der Inhalt der Speicherplätze 14 ist am Ausgang des Speichers 13 verfügbar. Alle Speicherplätze 14 können über einen Reset-Eingang 16 auf Null gesetzt werden. Der Ausgang des Speichers 13 ist mit einem Vergleicher 17 verbunden, der dann ein Warnsignal abgibt, wenn an einem Freigabeeingang des Vergleichers 17 ein Signal anliegt und der am Ausgang des Speichers 13 stehende Wert einen vorgegebenen Wert übersteigt. Das Warnsignal steuert z.B. eine im Fahreraum befindliche Warnlampe 18 an.

Ein zweiter Zähler 19 zählt die Impulse der Impulsformerstufe 11 und gibt bei Erreichen eines vorgegebenen Wertes ein Signal ab. Dieses Signal liegt zum einen am Freigabeeingang des Vergleichers 17 an und setzt zum anderen über den Reset-Eingang 16 des Speichers 13 alle Speicherplätze 14 zu Null.

Der Ausfall einer Gleiskette 3 kündigt sich dadurch an, daß die Zugkräfte von den durch Verschleiß oder Beschädigung angerissenen Stahlseilen nicht mehr vollständig übertragen werden können. In der DE-A-39 23 975 ist näher beschrieben, wie über Fanghaken an den Kettenführungsgliedern über eine begrenzte Fahrstrecke noch Zugkräfte übertragen werden können. Die Gleiskette 3 weist bei einem Defekt dann an dieser Stelle einen Teilungsfehler 20 auf. Wird dieser von einem Zahn 21 des Triebrades 2 erfaßt so wird ein Schlaggeräusch erzeugt und ist über die Antriebswelle 9 auf das Endabtriebsgehäuse 1 übertragbar. Das Geräusch wird vom Schwingbeschleunigungsaufnehmer 5 erfasst und in der Auswerteschaltung 10 mit dem aus der letzten Umdrehung ermittelten mittleren Laufgeräusch der Gleiskette 3 verglichen. Bei einer Überschreitung des mittleren Laufgeräusches um einen vorgegebenen Prozentsatz z.B. in Abhängigkeit von der Geschwindigkeit gibt die Auswerteschaltung 10 ein Signal ab.

Unterdessen zählt der erste Zähler 12 die von der Impulsformerstufe 11 und dem induktiven Aufnehmer 6 gelieferten Signale. Er beginnt dabei seine Zählung immer wieder bei eins, sobald er einen Wert erreicht, der der Anzahl der Teilungen der gesamten Gleiskette 3 entspricht. Hierdurch ordnet er jeder Kettenteilung eine Nummer zu und bestimmt so deren Umlaufposition. Der Stand des Zählers 12 adressiert die Speicherplätze 14 im Speicher 13, so daß jeder Kettenteilung ein Speicherplatz 14 zugeordnet ist, der die Signale der Auswerteschaltung 10 aufaddiert. Am Ausgang des Speichers 13 stehen die in den Speicherplätzen 14 aufaddierten Summen zur Verfügung und werden einem Vergleicher 17 zugeführt.

Ein zweiterZähler 19 zählt die Impulse der Impulsformerstufe 11 bis ein ganzzahliges Vielfaches der Anzahl der Teilungen der gesamten Endlosgummibandgleiskette 3 erreicht ist. Dann gibt dieser Zähler 19 ein Signal ab, mit dem zum einen der Vergleicher 17 über seinen Freigabeeingang freigegeben wird und über den Reset-Eingang 16 alle Speicherplätze 14 zu Null gesetzt werden. Mit anliegendem Freigabesignal prüft der Vergleicher 17, ob die in den Speicherplätzen 14 gespeicherten Werte einen vorgegebenen Wert übersteigen. Ist dies zumindest einmal der Fall, so gibt der Vergleicher 17 ein Signal ab, das die Warnlampe 18 zum Aufleuchten bringt und so dem Fahrer die Fehlfunktion einer Gleiskette anzeigt. Anstelle der Warnlampe kann es in weiteren Ausführungen auch vorgesehen sein, dieses Warnsignal an den im Fahrerraum befindlichen Fahrer in anderer Art und Weise optisch, akustisch oder auch haptisch weiterzugeben.

In einer weiteren, nicht dargestellten Ausführung der Erfindung sind jedem Zahn des Triebrades 2 eine ganzzahlige Anzahl n von Impulsmarken 8a zugeordnet, der Zähler 12 zählt bis zur n-fachen der Anzahl der Teilungen der gesamten Endlosgummibandgleiskette 3 und der Zähler 19 zählt bis zum n-fachen ganzzahligen Vielfachen der Anzahl der Teilungen der gesamten Endlosgummibandgleiskette.

Außerdem ist es in einer besonders vorteilhaften Weiterbildung der Erfindung vorgesehen, den Prozentsatz der für eine Signalauslösung an der Auswerteschaltung 10 notwendigen Überschreitung des mittleren Laufgeräusches nicht fest, sondern abhängig von der Fahrgeschwindigkeit zu wählen. Hierdurch können die Einflüsse von Eigenresonanz der Gleiskette, geschwindigkeitsabhängigem Anteil des Laufgeräusches u.ä. stark vermindert und die Auslösesicherheit der Überwachungseinrichtung deutlich erhöht werden.

An jeder Gleiskette eines Fahrzeuges kann eine Überwachungseinrichtung vorgesehen sein.

## Patentansprüche

1. Verfahren zum Überwachen von Gleisketten (3) eines Fahrzeuges im Fahrbetrieb auf Fehlfunktionen, insbesondere auf eine den Fahrbetrieb beeinträchtigende unzulässigen Änderung der Teilung der Gleiskette (3), dadurch gekennzeichnet, daß
- im Fahrbetrieb für jede Gleiskette (3) ein über ein mittleres Laufgeräusch einer intakten Gleiskette hinausgehendes Ist-Laufgeräusch einer defekten Gleiskette ein Fehlersignal ausgelöst wird,
- das Fehlersignal einer dieses Signal auslösenden Teilung (20) der Gleiskette (3) zugeordnet wird und
- bei Überschreiten einer vorgegebenen Signalhäufigkeit für eine Teilung ein Warnsignal abgegeben wird.

2. Verfahren zum Überwachen von Gleisketten (3) eines Fahrzeuges nach Anspruch 1, dadurch gekennzeichnet, daß zur Bestimmung der Signalhäufigkeit
- je Zahn des Triebrades und damit pro Teilung der Gleiskette (3) eine Anzahl von n Impulsen erzeugt werden,
- die so erzeugten Impulse gezählt werden und die Zählung wieder bei eins beginnt, wenn ein der n-fachen Anzahl der Teilungen der gesamten Gleiskette entsprechender Wert erreicht ist,
- der Zählerstand zur Bestimmung der Umlaufposition der Teilungen der Gleiskette verwendet wird und
- für jedes Kettenglied getrennt die Anzahl der Fehlersignale über einen vorgegebenen Zeitraum aufsummiert wird.

3. Verfahren zum Überwachen von Gleisketten (3) eines Fahrzeuges nach Anspruch 1, dadurch gekennzeichnet, daß zur Erzielung einer Auslösung des Fehlersignales das Ist-Laufgeräusch um einen vorgegebenen Prozentsatz das mittlere Laufgeräusch übersteigt, wobei dieser Prozentsatz abhängig von der gefahrenen Geschwindigkeit ist.

4. Verfahren zum Überwachen von Gleisketten (3) eines Fahrzeuges nach den Ansprüchen 1 oder 3, dadurch gekennzeichnet, daß zur Erfassung des mittleren Laufgeräusches der Mittelwert über das Ist-Laufgeräusch für eine ganze Umdrehung der Gleiskette verwendet wird.

5. Einrichtung zur Durchführung des Verfahrens nach den Ansprüchen 1, 2, 3, oder 4, **dadurch gekennzeichnet**, daß am Endabtriebsgehäuse (1) für ein Triebrad (2) ein Schwingbeschleunigungsaufnehmer (5) zur Erfassung eines dem Ist-Laufgeräusch der Gleiskette (3) entsprechenden Signales angeordnet ist, dem Schwingbeschleunigungsaufnehmer (5) eine Auswerteschaltung (10) nachgeschaltet ist, die aus dem Signal des Ist-Laufgeräusches über das mittlere Laufgeräusch hinausgehende Anteile herausfiltert, und wiederum nachgeschaltet eine Überwachungseinrichtung vorgesehen ist, die bei Überschreiten einer vorgegebenen Häufigkeit dieser Anteile für eine Teilung der Gleiskette (3) ein Fehlersignal abgibt, wobei die Überwachungseinrichtung aus dem Signal eines mit dem Triebrad (2) verbundenen Drehimpulsgebers (7) eine Umlaufposition der Teilungen der Kette bestimmt.

6. Einrichtung nach Anspruch 5, **dadurch gekennzeichnet**, daß der Drehimpulsgeber (7) aus einem am Rand des Endabtriebsgehäuses (1) befestigten induktiven Aufnehmer (6) und einem mit einer Antriebswelle (9) des Triebrades (2) fest verbundenen Impulsring (8) besteht, der Impulsring (8) für jeden Zahn des Triebrades (2) einen oder ein ganzzahliges Vielfaches von Impulsmarken (8a) aufweist, wobei die Längsachse des induktiven Aufnehmers (6) in einer senkrecht zur Antriebswellenachse verlaufenden Radialebene (Y-Y) so angeordnet ist, daß sie die Antriebswelle (9) schneidet und der induktive Aufnehmer (6) den Impulsmarken (8a) mit einem geringen Abstand (a) gegenübersteht.

7. Einrichtung nach den Ansprüchen 5 oder 6, dadurch gekennzeichnet, daß der Schwingbeschleunigungsaufnehmer (5) an einer Rippe (4) des Endabtriebsgehäuses (1) innerhalb einer Gehäusenische angeordnet und seine Achse höchster Empfindlichkeit so ausgerichtet ist, daß das Laufgeräusch ein maximales Signal im Schwingbeschleunigungsaufnehmer (5) hervorruft.

8. Einrichtung nach den Ansprüchen 5, 6 oder 7, dadurch gekennzeichnet, daß die Überwachungseinrichtung folgende Elemente umfasst:
- einen ersten Zähler (12), der die Impulse des Drehimpulsgebers (7) zählt und zu eins gesetzt wird, wenn der Zählerstand der n-fachen Anzahl der Teilungen der gesamten Gleiskette (3) entspricht,
- einen zweiten Zähler (19) der die Impulse des Drehimpulsgebers (7) zählt und ein Signal abgibt, wenn der Zählerstand dem n-fachen eines vorgegebenen ganzzahligen Vielfachen der Anzahl der Teilungen der gesamten Gleiskette (3) entspricht,
- einer der Anzahl der Teilungen der gesamten Gleiskette (3) entsprechenden Anzahl von Speicherplätzen (14), die vom Zählerstand des ersten Zählers (12) angesprochen werden und die während ihrer aktiven Phase die Anzahl der Fehlersignale des Schwingbeschleunigungsaufnehmers (5) zählen und
- einer Vergleichseinrichtung, die nach Auslösung durch das Signal des zweiten Zählers (19) den Wert in den den Kettenteilungen zugeordneten Speicherplätzen (14) prüft, ein Warnsignal abgibt, wenn ein Zählerstand einen vorgebenen Wert überschreitet und alle Speicherplätze (14) auf Null setzt.

9. Einrichtung nach den Ansprüchen 5 oder 8, dadurch gekennzeichnet, daß das Warnsignal an einen im Fahreraum des Fahrzeuges befindlichen Fahrer optisch, akustisch oder haptisch weitergegeben wird.

## Claims

1. A method of controlling crawler tracks (3) of a vehicle whilst in motion to determine malfunctions, in particular an inadmissible alteration in the division of the crawler track (3), which alteration impairs motion, characterised in that:
- whilst the vehicle is in motion, for each crawler track (3) a fault signal is triggered by an actual running noise of a defective crawler track, which noise exceeds a mean running noise of an intact crawler track,
- the fault signal is assigned to a division (20) of the crawler track (3) triggering this signal, and
- when a given signal frequency for one division is exceeded, a warning signal is emitted.

2. A method of controlling crawler tracks (3) of a vehicle as claimed in Claim 1, characterised in that in order to determine the signal frequency:
- for every tooth of the driving wheel and hence for every division of the crawler track (3), a number n of pulses is generated,
- the pulses thus generated are counted, and the count recommences at one when a value corresponding to n times the number of divisions of the entire crawler track is reached,
- the counter count is used to determine the rotational position of the divisions of the crawler track, and
- for every track link separately, the number of fault signals over a given period is added up.

3. A method of controlling crawler tracks (3) of a vehicle as claimed in Claim 1, characterised in that, in order to achieve a triggering of the fault signal, the actual running noise exceeds the mean running noise by a given percentage which is dependent on the speed travelled.

4. A method of controlling crawler tracks (3) of a vehicle as claimed in Claims 1 or 3, characterised in that the mean running noise is determined by the mean value of the actual running noise for one complete revolution of the crawler track.

5. Apparatus for carrying out the method as claimed in Claims 1, 2, 3 or 4, characterised in that, on the end output housing (1) for a driving wheel (2), an oscillation acceleration receiver (5) is positioned to detect a signal corresponding to the actual running noise of the crawler track (3), in that connected downstream of the oscillation acceleration receiver (5) is an evaluation circuit (10) which filters components exceeding the mean running noise out of the signal of the actual running noise and in that, again connected downstream, is a control device which emits a fault signal when a given frequency of these components is exceeded for one division of the crawler track (3), the control device determining a rotational position of the divisions of the track from the signal of an angular momentum generator (7) connected to the driving wheel (2).

6. Apparatus as claimed in Claim 5, characterised in that the angular momentum generator (7) comprises firstly an inductive receiver (6) secured to the border of the end output housing (1) and secondly a pulse collar (8) firmly connected to a drive shaft (9) of the driving wheel (2) and in that the pulse collar (8) has a or a whole multiple of pulse notches (8a) for each tooth of the driving wheel (2), the longitudinal axis of the inductive receiver (6) being positioned in a radial plane (Y-Y) perpendicular to the drive shaft axis so that it intersects the drive shaft (9) and the inductive receiver (6) faces the pulse notches (8a) at a slight distance (a).

7. Apparatus as claimed in Claims 5 or 6, characterised in that the oscillation acceleration receiver (5) is positioned on a rib (4) of the end output housing (1) within a housing recess and in that its axis of greatest sensitivity is aligned so that the running noise gives rise to a maximum signal in the oscillation acceleration receiver (5).

8. Apparatus as claimed in Claims 5, 6 or 7, characterised in that the control device comprises the following elements:
- a first counter (12) which counts the pulses of the angular momentum generator (7) and is set at one when the counter count corresponds to n times the number of divisions of the entire crawler track (3),
- a second counter (19) which counts the pulses of the angular momentum generator (7) and emits a signal when the counter count corresponds to n times a given whole multiple of the number of divisions of the entire crawler track (3),
- a number of storage locations (14) which corresponds to the number of divisions of the entire crawler track (3), which storage locations are actuated by the counter count of the first counter (12) and which, during their active phase, count the number of fault signals of the oscillation acceleration receiver (5), and
- a reference device which, after being triggered by the signal of the second counter (19), checks the value in the storage locations (14) assigned to the track divisions, emits a warning signal if a counter count exceeds a given value and sets all storage locations (14) to zero.

9. Apparatus as claimed in Claims 5 or 8, characterised in that the warning signal is transmitted by visual, audible or haptic means to a driver located in the driver's cab of the vehicle.

## Revendications

1. Procédé de contrôle de chenilles (3) d'un véhicule en marche pour détecter des défauts de fonctionnement, en particulier une variation inadmissible, gênant la marche, de la division de la chenille (3), caractérisé en ce que
- pendant la marche, pour chaque chenille (3), un signal de défaut est déclenché indiquant un bruit réel d'une chenille défectueuse, supérieur à un bruit moyen d'une chenille intacte,
- le signal de défaut est affecté à une division (20) de la chenille (3), déclenchant ce signal et
- en cas de dépassement d'une fréquence donnée de signaux pour une division, un signal d'alarme est délivré.

2. Procédé de contrôle de chenille (3) d'un véhicule selon la revendication 1, caractérisé en ce que pour déterminer la fréquence des signaux
- un nombre n d'impulsions est produit pour chaque dent de la roue motrice et donc pour chaque division de la chenille (3),
- les impulsions ainsi produites sont comptées et le comptage recommence à un, lorsqu'est atteinte une valeur correspondant à n fois le nombre de divisions de l'ensemble de la chenille,
- on utilise les chiffres du compteur pour déterminer la position de rotation des divisions de la chenille et
- pour chaque maillon de la chaîne on additionne séparément le nombre de signaux de défauts pendant un intervalle de temps donné.

3. Procédé de contrôle de chenille (3) d'un véhicule selon la revendication 1, caractérisé en ce que pour obtenir un déclenchement du signal de défaut, le bruit réel dépasse d'un pourcentage donné le bruit moyen, ce pourcentage dépendant de la vitesse d'avance.

4. Procédé de contrôle de chenille (3) d'un véhicule selon les revendications 1 ou 3, caractérisé en ce que pour détecter le bruit moyen on utilise la valeur moyenne du bruit réel pendant une rotation entière de la chenille.

5. Dispositif pour la mise en oeuvre du procédé selon les revendications 1, 2, 3 ou 4, caractérisé en ce qu'un capteur d'accélération d'oscillation (5), destiné à détecter un signal correspondant au bruit réel de la chenille (3), est placé sur le carter de sortie d'extrémité (1) d'une roue motrice (2), en ce qu'un circuit d'exploitation (10) est monté en aval du capteur d'accélération d'oscillation (5), lequel circuit élimine, par filtrage du signal de bruit réel, les composantes dépassant le bruit moyen, et en ce qu'il est prévu, toujours en aval, un dispositif de contrôle, qui délivre un signal de défaut en cas de dépassement d'une fréquence donnée de ces composantes pour une division de la chenille 3, le dispositif de contrôle déterminant à partir du signal d'un capteur d'impulsions de rotation 7, relié à la roue motrice 2, une position de rotation des divisions de la chenille.

6. Dispositif selon la revendication 5, caractérisé en ce que le capteur d'impulsions de rotation (7) est constitué d'un capteur (6) inductif, fixé sur le bord du carter de sortie d'extrémité (1) et d'un anneau d'impulsion (8), relié fixement à un arbre moteur (9) de la roue motrice (2), l'anneau d'impulsion (8) présente pour chaque dent de la roue motrice (2), un multiple ou un multiple entier de marques d'impulsions (8a), l'axe longitudinal du capteur (6) inductif étant disposé dans un plan radial (Y-Y) perpendiculaire à l'axe de l'arbre moteur, de manière qu'il coupe l'arbre moteur (9) et que le capteur (6) inductif se trouve face aux marques d'impulsions (8a), à une faible distance (a).

7. Dispositif selon les revendications 5 ou 6, caractérisé en ce que le capteur d'accélération d'oscillation (5) est placé sur une nervure (4) du carter (1), à l'intérieur d'une niche et son axe de sensibilité maximal est orienté de manière que le bruit de roulement provoque un signal maximal dans le capteur d'accélération d'oscillation (5).

8. Dispositif selon les revendications 5, 6 ou 7, caractérisé en ce que le dispositif de contrôle comporte les éléments suivants :
- un premier compteur (12), qui compte les impulsions du capteur d'impulsions de rotation (7) et est remis à un lorsque les chiffres du compteur correspondent à n fois le nombre de divisions de l'ensemble de la chenille (3),
- un deuxième compteur (19) qui compte les impulsions du capteur d'impulsions de rotation (7) et délivre un signal lorsque les chiffres du compteur correspondent à n fois un multiple entier donné du nombre de divisions de l'ensemble de la chenille (3),
- un nombre d'emplacements de mémoire (14), correspondant au nombre de divisions de l'ensemble de la chenille (3), qui sont appelés par les chiffres du premier compteur (12) et qui pendant leur phase active comptent le nombre de signaux de défaut du capteur d'accélération d'oscillation (5) et
- un dispositif de comparaison, qui après déclenchement par le signal du deuxième compteur (19), vérifie la valeur dans les emplacements de mémoire (14) affectés aux divisions de la chenille, délivre un signal d'alarme lorsque les chiffres du compteur dépassent une valeur donnée et remet à zéro tous les emplacements de mémoire (14).

9. Dispositif selon les revendications 5 ou 8, caractérisé en ce que le signal d'alarme est transmis optiquement, acoustiquement ou de manière tactile.
